# FASCICULE DE BREVET EUROPEEN

(11) **EP 3 300 940 B1**
(45) Date de publication et mention de la délivrance du brevet: **19.07.2023**
(21) Numéro de dépôt: 17193513.3
(22) Date de dépôt: 27.09.2017
(51) Int. Cl.: B60K 35/00, B60Q 1/26, B60Q 3/208, B60Q 3/74, B60Q 3/80, B60Q 3/16, G02B 27/01, G03B 21/32, G03B 21/56, G03B 21/60, G03B 29/00

(54) **DISPOSITIF D'ÉCLAIRAGE INTÉRIEUR POUR VÉHICULE AUTOMOBILE**
INNENBELEUCHTUNGSVORRICHTUNG FÜR KRAFTFAHRZEUG
INTERIOR LIGHTING DEVICE FOR A MOTOR VEHICLE

(30) Priorité: 28.09.2016 FR 1659197
(43) Date de publication de la demande: 04.04.2018
(73) Titulaire: Valeo Vision, 93012 Bobigny Cedex (FR)
(72) Inventeur: BARILLOT, Thibaud, 93012 BOBIGNY Cedex (FR); BEL, Romain, 93012 BOBIGNY Cedex (FR)
(74) Mandataire: Valeo Visibility

(56) Documents cités:
- EP-A2- 2 594 987
- JP-A- 2004 299 591
- US-A1- 2014 168 608
- US-A1- 2015 094 897
- US-A1- 2015 261 219

## Description

### Domaine technique

La présente invention concerne un dispositif d'éclairage intérieur pour véhicule automobile apte à modifier l'ambiance intérieure de l'habitacle en isolant les occupants du véhicule de l'environnement extérieur et un procédé d'éclairage d'au moins une partie de l'habitacle.

### État de la technique antérieure

Actuellement les dispositifs d'éclairage intérieur intégrés dans l'habitacle d'un véhicule automobile présentent des fonctionnalités restreintes. De manière générale l'éclairage intérieur se limite aux feux plafonniers pouvant faire office de liseuses et dont l'activation peut être automatique ou manuelle, ainsi qu'à d'autres sources lumineuses pouvant être activées pour créer un éclairage d'ambiance de faible intensité. Cet éclairage d'ambiance permet, par exemple, de mettre en valeur des détails à l'intérieur du véhicule.

Le développement de véhicules communicants à pilotage autonome ou semi-autonome favorise l'intégration de nouvelles fonctions en vue de convertir l'habitacle en un espace convivial et confortable tout en maintenant un niveau élevé de sécurité. Cette tendance implique notamment d'accorder une place importante à l'information et au multimédia au coeur des véhicules. Certains véhicules sont ainsi équipés d'écrans qui permettent, outre le guidage, le visionnage de photos ou de vidéos sans pour autant donner la possibilité aux occupants du véhicule de s'isoler de l'environnement extérieur. Dans les solutions intégrées, une station multimédia peut être implantée à l'avant du véhicule et commander des écrans encastrés dans le tableau de bord, au dos de l'appuie-tête de chaque siège avant ou encore dans le plafond. Dans les solutions mobiles, les dispositifs multimédias nomades de type PC portable, smartphone, tablette, lecteurs DVD, sont installés et connectés dans l'habitacle par les occupants du véhicule.

Les documents US 2014/168608 A1, US 2015/094897 A1, JP 2004 299591 A, US 2015/261219 A1 et EP 2 594 987 A2 présentent l'état de la technique pertinent.

L'invention a pour objectif de remédier aux inconvénients précités en améliorant le pilotage et le contrôle de l'éclairage intérieur de l'habitacle d'un véhicule automobile grâce à un dispositif apte à modifier certaines surfaces de l'habitacle en vue d'y projeter des images et/ou des vidéos et de créer une ambiance « cocon » apaisante en occultant et modifiant la vue sur l'extérieur depuis l'intérieur de l'habitacle.

Le dispositif selon l'invention assure la fiabilité de la commande et améliore, par son ergonomie, le confort des occupants du véhicule tout en garantissant leur sécurité.

### Exposé de l'invention

L'invention a pour objet un dispositif d'éclairage intérieur pour véhicule automobile selon la revendication 1 comprenant entre autres :
- au moins une source lumineuse apte à émettre au moins un faisceau lumineux ;
- au moins un support de projection ;
- un module de commande agencé pour configurer la source lumineuse, le module étant agencé en outre pour configurer l'au moins un support de projection en un mode passif ou en un mode actif dans lequel le faisceau lumineux forme au moins une image, dynamique et/ou statique, sur ledit support de projection et selon le mode de pilotage manuel ou automatique du véhicule automobile.

Par véhicule automobile, on entend ici aussi bien les véhicules à pilotage manuel que les véhicules autonomes à pilotage automatique ou encore les véhicules semi-autonomes dont le pilotage peut basculer d'un mode manuel à un mode automatique. Il est entendu qu'en fonction du mode de pilotage du véhicule et pour des raisons de sécurité, le choix des supports de projection peut varier. Ainsi, dans un véhicule autonome ou semi-autonome où le pilotage fonctionne en mode automatique, chaque surface vitrée du véhicule et/ou le pare-brise et/ou l'une des vitres latérales avant et /ou arrière et/ou le toit vitré et/ou la lunette arrière peut servir de support de projection. Dans cette configuration, la source lumineuse est de préférence implantée à l'avant de l'habitacle, par exemple au niveau du pavillon avant à l'aplomb du tableau de bord et/ou dans la console centrale avant.

Le dispositif de l'invention permet de piloter au moins une source lumineuse, montée fixe ou mobile dans l'habitacle. Par source lumineuse, on entend, au moins un moyen d'émission de rayons lumineux pour former un faisceau lumineux projeté sur le support de projection de l'invention. Un tel moyen peut être une source lumineuse simple telle qu'un bandeau lumineux, une source ponctuelle de lumière configurée pour émettre un faisceau de lumière faiblement divergent, telle qu'une liseuse par exemple, et notamment du type d'une diode électroluminescente ou bien une source et un dispositif projecteur associé ou bien encore une source et un réflecteur permettant de dévier les rayons. Dans le cas où la source lumineuse est constituée d'une ou plusieurs diodes électroluminescentes (LED), l'intensité lumineuse et/ou la couleur des diodes peuvent varier en fonction de l'atmosphère recherchée.

Selon une caractéristique avantageuse et préférée de l'invention, la source lumineuse est un dispositif de projection de lumière et/ou d'images statiques ou dynamiques et/ou de vidéos, de préférence un vidéoprojecteur, et de préférence encore un pico-projecteur. Selon un mode de réalisation de l'invention, la source lumineuse peut être implantée au niveau du pavillon avant et/ou arrière du véhicule et/ou dans la console centrale. Cette dernière peut, entre autres fonctions, faire office d'accoudoir au conducteur et au passager avant et/ou dans au moins une console arrière, fixe ou escamotable, située entre les sièges arrière et pouvant servir d'accoudoir. L'objectif de l'invention étant de modifier la vue sur l'extérieur d'au moins un occupant du véhicule et de créer, au sein de l'habitacle, des ambiances lumineuses agréables, il est envisageable de projeter des images statiques tels que des paysages et/ou des images dynamiques tel que des diaporamas de photos, des vidéos ou encore des images du type « égaliseur » en lien avec la musique diffusée dans l'habitacle.

Selon une caractéristique avantageuse de l'invention, le support de projection est une surface, de préférence lisse, vierge d'informations et d'éléments structurels, et agencée pour recevoir au moins une image, statique ou dynamique, projetée par une source lumineuse. Ladite surface ou support de projection est avantageusement une surface vitrée du véhicule tel qu'un pare-brise et/ou au moins une vitre latérale avant et /ou arrière et/ou un toit vitré et/ou une lunette arrière. Ladite surface vitrée est agencée pour commuter réversiblement et à la demande d'un mode passif OFF, correspondant de préférence un état transparent de la surface vitrée, à un mode actif ON, correspondant de préférence à un état au moins partiellement opaque de ladite surface vitrée, défini par exemple par un coefficient de transmission inférieur ou égal à 25% dans le spectre visible. De préférence encore, le mode actif ON correspond à un état opaque de la surface vitrée. Pour parvenir à cette transition d'un mode OFF à un mode ON, la surface vitrée constitutive du support de projection comprend, de préférence, une structure électrochrome.

La technologie électrochrome permet, sous l'effet d'un champ électrique appliqué, de faire varier les propriétés optiques dudit support, en particulier sa transmission lumineuse. Par cette technologie la transmission lumineuse de la surface vitrée constitutive du support de projection selon l'invention, diminue jusqu'à devenir une surface opaque, apte à recevoir au moins une image projetée dynamique et/ou statique.

Les structures électrochromes sont des structures composites comprenant une pluralité de couches fonctionnelles. Lesdites couches sont constituées d'au moins un support ou substrat, de préférence au moins une feuille de verre ou surface vitrée transparente et un système électrochrome lequel est constitué de deux couches d'électrodes lieux de réactions électrochimiques, l'une des électrodes devant être nécessairement transparente, d'un élément conducteur de charges ou électrolyte apte à permettre le passage d'un courant électrique par déplacement d'ions, et d'un matériau électrochrome organique et/ou inorganique. Les propriétés optiques de la structure électrochrome ainsi formée peuvent varier, en particulier la transmission lumineuse, en réponse à l'application d'un champ électrique qui génère une réaction réversible d'oxydoréduction au sein du matériau électrochrome.

Pour que le support de projection en mode actif ON puisse s'apparenter à un écran de projection et garantir une qualité d'image suffisante, on préférera un état opaque de couleur claire, de préférence encore de couleur blanche.

La technologie électrochrome associée à des surfaces vitrées est fréquemment utilisée dans le bâtiment et l'industrie automobile. Les vitrages obturateurs à cristaux liquide, aptes à passer d'un état translucide opaque à un état transparent, trouvent une application dans le bâtiment comme cloisons de verre ou dans les voitures comme parois intérieures. Cette modification d'état est réversible en fonction du potentiel électrique appliqué entre les bornes de l'écran électrochrome et selon un temps de réponse relativement court. Les vitrages électrochromes assombrissant trouvent une application dans les toits vitrés de véhicules et assure une protection solaire. Ils sont aptes à varier réversiblement de couleur sous l'effet d'une tension électrique depuis un état transparent à un état coloré sombre. Les miroirs rétroviseurs électrochromes ayant une fonction anti-éblouissement fonctionnent sur un principe similaire et ont la capacité de pouvoir s'assombrir rapidement en cas d'éblouissement du conducteur provoqué par les phares des autres usagers roulant derrière lui.

Pour conférer au support de projection selon l'invention des propriétés électrochromes, plusieurs solutions sont envisageables. Le verre constituant la surface vitrée du support de projection a une structure composite. De préférence, un verre composite comprend un système électrochrome ou bien peut être recouvert d'un film électrochrome, éventuellement adhésif, ledit film adhésif transformant alors la surface vitrée existante en une surface vitrée intelligente, de type écran de projection.

Chaque surface vitrée du véhicule automobile, le pare-brise et/ou au moins une vitre latérale avant et /ou arrière et/ou le toit vitré et/ou la lunette arrière est susceptible de servir de support de projection selon l'invention. Cependant, le choix des supports de projection varie selon le mode de réalisation de l'invention, plus particulièrement est fonction du type de pilotage manuel ou automatique du véhicule et éventuellement des conditions de sécurité.

Dans un véhicule classique ou semi-autonome où le pilotage fonctionne en mode manuel, les zones de projection sont réduites afin de ne pas entraver la visibilité du conducteur sur la scène de route ou détourner son attention de celle-ci. Dans ce mode de réalisation, les supports de projection sont limités au toit vitré et aux vitres latérales arrière, de préférence à la vitre latérale arrière située immédiatement derrière le conducteur. Dans cette configuration, la source lumineuse est de préférence implantée à l'arrière de l'habitacle au niveau du pavillon arrière et/ou dans l'accoudoir de la console médiane arrière.

Il est possible de configurer les zones avant et/ou arrière de l'habitacle, et/ou les supports de projection et/ou les sources lumineuses de manière indépendante et autonome. On pourra avoir, par exemple, une première image projetée sur une vitre latérale avant et une seconde image, distincte de la première, projetée sur une vitre latérale arrière dudit l'habitacle. On notera que toute autre combinaison de projection d'images, par exemple la première sur une vitre latérale et la seconde sur le toit vitré, est envisageable.

Le module de commande selon l'invention est agencé, d'une part, pour activer et configurer la source lumineuse et, d'autre part, pour configurer le support de projection en un mode passif OFF ou en un mode actif ON, de manière à ce que ledit support de projection puisse recevoir au moins une image dynamique et/ou statique formée par le faisceau lumineux d'au moins une source lumineuse de l'habitacle. Le module de commande, connecté à au moins une source lumineuse et un support de projection, comporte au moins un processeur et/ou une mémoire et/ou un moyen de stockage de données et/ou un moyen de lecture de fichiers d'images statiques et/ou dynamiques. Le moyen de stockage de données du module de commande comprend une base de données d'images statiques et/ou dynamique préenregistrées ou transférées par les utilisateurs à l'aide d'un dispositif multimédia amovible connecté au module de commande ou selon tout moyen de communication filaire ou sans fil, tel que par exemple par Bluetooth ou par WIFI.

Par dispositif multimédia amovible on entend une carte mémoire de stockage de données numériques SD ou un périphérique extérieur de type clef USB, Smartphone, appareil photos PC portable, tablette, lecteur DVD. Le module de commande implanté, de préférence, à l'avant du véhicule est apte à lire des fichiers d'images à projeter et à transmettre des instructions d'activation des sources lumineuses et supports de projection. Le module de commande peut comporter au moins un bouton de commande implanté à l'arrière de l'habitacle, par exemple dans au moins une console arrière, de manière à ce que les passagers arrière du véhicule puissent actionner de façon autonome et indépendante les sources lumineuses et supports de projection. Selon une caractéristique avantageuse de l'invention, on peut associer au dispositif de l'invention, de préférence au module de commande, au moins un capteur de température et/ou d'intensité lumineuse, afin de détecter les conditions extérieures au véhicule. En réponse aux données collectées par lesdits capteurs, le module de commande peut sélectionner et projeter des images aptes à améliorer l'ambiance de l'habitacle et le bien-être des occupants. À titre d'exemple, on peut prévoir la projection d'images de paysages ensoleillés si les données de températures et/ou d'intensité lumineuse détectées par le capteur sont en-dessous d'un certain seuil.

L'invention concerne également un procédé d'éclairage d'au moins une partie d'un espace intérieur d'un véhicule automobile par le dispositif d'éclairage selon l'invention, lequel permet d'occulter et de modifier la vue sur l'extérieur depuis l'intérieur de l'habitacle en vue de créer une ambiance spécifique apaisante au sein du véhicule. Ledit procédé d'éclairage comporte au moins :
- une étape d'activation du module de commande, ladite activation pouvant être réalisée manuellement par au moins un occupant du véhicule, ou automatiquement lorsque le véhicule, autonome ou semi-autonome, est en mode de pilotage automatique ou encore suite à la détection et la collecte de conditions particulières de température et/ou de luminosité extérieures audit véhicule par au moins un capteur de température et/ou d'intensité lumineuse. Les données collectées par lesdits capteurs peuvent faire l'objet d'une étape d'analyse par le module de commande,
- une étape de sélection et de configuration d'au moins une surface vitrée électrochrome constitutive d'un support de projection du véhicule par atténuation de la transmission lumineuse de ladite surface vitrée, de manière à ce que ladite surface vitrée bascule d'un mode passif OFF, correspondant à un état transparent, à un mode actif ON, correspondant à un état opaque, de préférence blanc. Le support de projection ainsi configuré est alors assimilable à un écran de projection, de préférence blanc,
- une étape de configuration d'au moins une source lumineuse de l'habitacle pour diriger au moins un faisceau lumineux de ladite source sur le support de projection configuré,
- une étape de sélection et de lecture de fichiers d'images préenregistrées dans le moyen de stockage du module de commande ou transférées par au moins un occupant du véhicule à l'aide d'un dispositif multimédia amovible préalablement connecté audit module de commande.

### Description des figures

D'autres caractéristiques et avantages de l'invention apparaitront plus clairement à la lecture de la description détaillée d'un mode de réalisation de l'invention, donnée ci-après à titre d'exemple illustratif et non limitatif et s'appuyant sur les figures annexées, dans lesquelles on a illustré le dispositif d'éclairage intérieur selon l'invention intégré dans l'habitacle d'un véhicule automobile.

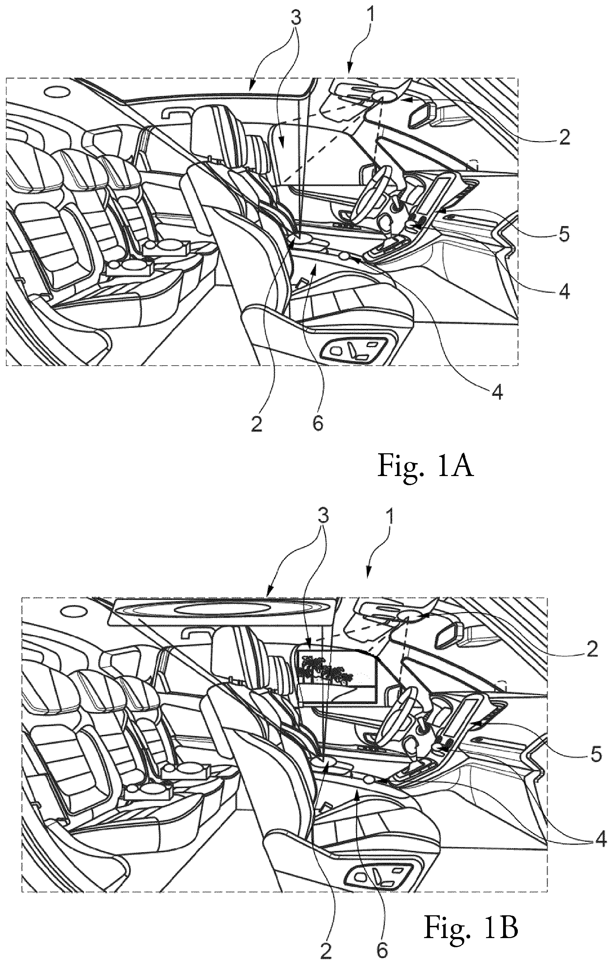

- les figures 1a et 1b sont des vues de profil et en perspective de l'habitacle, dans lequel sont intégrées, à l'avant du véhicule, des sources lumineuses aptes à projeter au moins une image sur des supports de projection lesquels ont été respectivement configurés en mode inactif OFF et en mode actif ON par le module de commande.

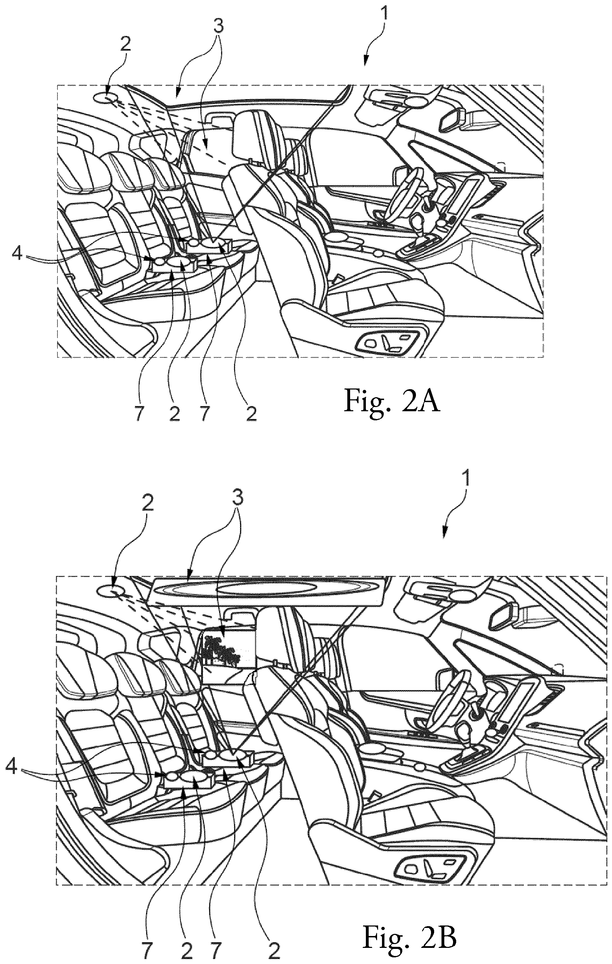

- les figures 2a et 2b sont des vues de profil et en perspective de l'habitacle, dans lequel sont intégrées, à l'arrière du véhicule, des sources lumineuses aptes à projeter au moins une image sur des supports de projection lesquels ont été respectivement configurés en mode inactif OFF et en mode actif ON par le module de commande.

### Description détaillée de l'invention

Il est nécessaire de noter que si les figures exposent l'invention de manière détaillée pour sa mise en oeuvre, elles peuvent également servir à mieux définir l'invention le cas échéant. On comprendra également que le mode de réalisation de l'invention illustré par les figures est donné à titre d'exemple non limitatif.

Les figures 1a et 1b illustrent l'agencement et le fonctionnement du dispositif d'éclairage intérieur 1 selon l'invention dans la zone avant de l'habitacle. La figure 1a illustre le dispositif d'éclairage intérieur 1 lorsque celui-ci se trouve en mode passif OFF tandis que la figure 1b illustre le dispositif d'éclairage intérieur 1 après basculement en mode actif ON. Dans ce mode de réalisation, le dispositif d'éclairage intérieur 1 de l'invention comporte deux sources lumineuses 2, des supports de projection 3, et un module de commande. Une première source lumineuse 2 est implantée au niveau du pavillon avant, à l'aplomb du tableau de bord et une seconde dans la console centrale 6. Lesdites sources lumineuses 2 ciblent les supports de projection 3, dont les représentations sont ici, pour des raisons de clarté, limitées à la surface vitrée latérale avant côté conducteur et au toit vitré. Le module de commande, intégré ici au tableau de bord 5, comprend un bouton de commande 4 supplémentaire implanté dans la console centrale 6, de façon à ce que le conducteur et/ou le passager avant puissent activer le dispositif d'éclairage 1 tout en laissant leur avant-bras en position de repos sur l'accoudoir.

Les sources lumineuses 2 sont, de préférence, des pico-projecteurs permettant de projeter des images statiques et/ou dynamiques sur les supports de projection 3 lorsque ceux-ci ont basculé d'un mode passif OFF (Figure 1a) à un mode actif ON (Figure 1b). Cette commutation, d'un état transparent passif à un état opaque actif, est rendue possible après activation des surfaces vitrées électrochromes constitutives des supports de projection 3 par application d'une tension électrique par le module de commande. La surface opacifiée du support de projection s'apparente dès lors à un écran de projection blanc et garantit la qualité de l'image projetée. Les images projetées ont pour effet d'isoler les occupants du véhicule de l'environnement extérieur et favorisent la création d'une ambiance apaisante au sein de l'habitacle. Il est possible de projeter de manière autonome et indépendante des images distinctes sur chacun des supports de projection activés. Pour des raisons évidentes de sécurité, les supports de projection 3 situés à l'avant de l'habitacle, en particulier les vitres latérales avant et/ou le pare-brise, ne sont activés que lorsque le pilotage du véhicule est en mode automatique.

Les figures 2a et 2b illustrent l'agencement et le fonctionnement du dispositif d'éclairage intérieur 1 selon l'invention dans la zone arrière de l'habitacle. La figure 2a illustre le dispositif d'éclairage intérieur 1 lorsque celui-ci se trouve en mode passif OFF tandis que la figure 1b illustre le dispositif d'éclairage intérieur 1 après basculement en mode actif ON. Dans ce mode de réalisation, le dispositif d'éclairage intérieur 1 de l'invention comporte au moins deux sources lumineuses 2, des supports de projection 3, un module de commande. Une première source lumineuse 2 est implantée au niveau du pavillon arrière et au moins une seconde dans au moins une console arrière 7 en fonction du nombre de siège passager. Lesdites sources lumineuses ciblent les supports de projection 3, dont les représentations sont ici, pour des raisons de clarté, limitées à la surface vitrée latérale arrière côté conducteur et au toit vitré. Le module de commande est activé par l'intermédiaire d'au moins un bouton de commande 4 implanté dans au moins une console arrière 7, de façon à ce que chaque passager arrière puisse activer le dispositif d'éclairage 1 de façon autonome et indépendante.

Comme précédemment décrit, les sources lumineuses 2 sont, de préférence, des pico-projecteurs permettant de projeter des images statiques et/ou dynamiques sur les supports de projection 3 lorsque ceux-ci ont basculé d'un mode passif OFF (Figure 2a) à un mode actif ON (Figure 2b). Cette commutation, d'un état transparent passif à un état opaque actif, est rendue possible après activation des surfaces vitrées électrochromes constitutives des supports de projection 3 par application d'une tension électrique par le module de commande. La surface opacifiée du support de projection s'apparente dès lors à un écran de projection blanc et garantit la qualité de l'image projetée. Les images projetées ont pour effet d'isoler les occupants du véhicule de l'environnement extérieur et favorisent la création d'une ambiance apaisante au sein de l'habitacle. Il est possible de projeter de manière autonome et indépendante des images distinctes sur chacun des supports de projection activé. Ce deuxième mode de réalisation est applicable quel que soit le mode de pilotage automatique ou manuel du véhicule et potentiellement sur toute surface vitrée située à l'arrière de l'habitacle. En pilotage manuel il est cependant recommandé, pour des raisons de sécurité, de limiter la projection d'images sur la surface vitrée latérale située immédiatement derrière le conducteur et/ou sur le toit vitré.

Quel que soit le mode de réalisation de l'invention, on comprend que le dispositif d'éclairage intérieur 1 peut générer la projection d'images statiques et/ou dynamiques sur les surfaces vitrées électrochromes du véhicule, lesdites surfaces constituant des supports de projection après avoir été opacifiées par configuration en mode actif ON. On comprend également que le dispositif d'éclairage intérieur 1 peut générer diverses ambiances lumineuses au sein de l'habitacle, en réponse aux activations dudit dispositif par le conducteur et/ou les passagers avant et/ou arrière du véhicule. Il est entendu que tout passager avant, en particulier le conducteur, est apte à activer l'ensemble des sources lumineuses 2 et des supports de projection 3 depuis le module de commande implanté dans le tableau de bord et/ou dans la console centrale et à commander la projection d'images statiques et/ou dynamiques identiques et/ou distinctes sur chacun desdits supports de projection. De façon similaire, les passagers arrière peuvent activer les sources lumineuses et les supports de projection arrière de leur choix à l'aide des boutons de commande implantés dans au moins une console arrière 7 et ceci de manière autonome et indépendante des actions générées par les occupants avant du véhicule.

De nombreuses et diverses combinaisons d'ambiance lumineuses peuvent être crées au sein de l'habitacle, par projection d'images statiques, par exemple des paysages, et/ou dynamiques, par exemple un diaporama de photos et/ou une vidéo ou encore des images du type « égaliseur » en lien avec la musique diffusée dans l'habitacle.

Le module de commande, configuré pour configurer les supports de projection et les sources lumineuses, comporte également des moyens de stockage et/ou des moyens de lecture de fichiers d'images, lesdites images pouvant être préenregistrées ou transférées par les utilisateurs à l'aide d'au moins un dispositif multimédia amovible connecté à cet effet au module de commande. Par dispositifs multimédia amovibles on entend une carte mémoire de stockage de données numériques SD ou une clef USB, Smartphone, appareil photos, PC portable, tablette, lecteurs DVD...

En outre, il est possible d'associer au module de commande des capteurs température et/ou d'intensité lumineuse, aptes à détecter les conditions extérieures au véhicule. En réponse aux données collectées par lesdits capteurs, le module de commande peut sélectionner et projeter des images aptes à améliorer l'ambiance de l'habitacle. À titre d'exemple illustratif, on peut prévoir de projeter une image représentant une plage lorsque le capteur de température détecte une température extérieure basse et/ou une image de paysage ensoleillé lorsque le capteur d'intensité lumineuse détecte un assombrissement extérieur lié à l'heure de la journée, la saison ou encore lors de la traversée d'un tunnel.

Selon le mode de réalisation principal et préféré de l'invention, le procédé d'éclairage d'au moins une partie de l'habitacle d'un véhicule automobile grâce auquel la vue sur l'extérieur depuis l'intérieur de l'habitacle est occultée et modifiée en vue de créer une ambiance spécifique apaisante au sein du véhicule comporte au moins :
- une étape d'activation du module de commande, ladite activation pouvant être réalisée manuellement par au moins un occupant du véhicule, ou automatiquement lors du passage du véhicule en mode de pilotage automatique ou encore suite à la détection, par des capteurs de température et/ou d'intensité lumineuse, de conditions particulières de température et/ou de luminosité extérieures audit véhicule,
- une étape de sélection et de configuration d'au moins une surface vitrée électrochrome du véhicule ou support de projection 3 de manière à faire varier la transmission lumineuse de ladite surface vitrée, de préférence à l'atténuer afin que la surface vitrée bascule d'un mode passif OFF, correspondant à un état transparent, à un mode actif ON, correspondant à un état opaque. Le support de projection 3 ainsi configuré s'apparente à un écran de projection, de préférence blanc,
- une étape de configuration d'au moins une source lumineuse 2 pour diriger au moins un faisceau lumineux de ladite source sur le support de projection 3 configuré,
- une étape de sélection et de lecture de fichiers d'images préenregistrées dans le moyen de stockage du module de commande ou transférées par au moins un occupant du véhicule à l'aide d'un dispositif multimédia amovible préalablement connecté audit module de commande.

La description qui précède explique clairement comment l'invention permet d'atteindre les objectifs qu'elle s'est fixée en proposant un dispositif d'éclairage intérieur ergonomique à commande simple et fiable, apte à améliorer le bien-être des occupants de véhicules.

## Revendications

1. Dispositif d'éclairage intérieur (1) pour véhicule automobile comprenant :
- au moins une source lumineuse (2) apte à émettre au moins un faisceau lumineux,
- au moins un support de projection (3), le support de projection (3) étant une surface vitrée du véhicule agencé pour commuter réversiblement d'un état transparent à un état opaque,
- un module de commande agencé pour configurer la source lumineuse (2), le module (4) étant agencé en outre pour configurer l'au moins un support de projection (3) en un mode passif ou en un mode actif dans lequel le faisceau lumineux forme une image sur ledit support de projection (3) et selon le mode de pilotage manuel ou automatique du véhicule automobile
**caractérisé en ce qu'**il comporte au moins un capteur de température et/ou d'intensité lumineuse associé audit module de commande, ledit au moins un capteur détectant les conditions extérieures au véhicule et **en ce que** l'image formée sur ledit support de projection (3) est formée en réponse aux données collectées par ledit au moins un capteur et **en ce qu'**en réponse aux données collectées par ledit au moins un capteur, le module de commande sélectionne et projette ladite image.

2. Dispositif d'éclairage intérieur selon la revendication 1, **caractérisé en ce que** la source lumineuse (2) est un dispositif de projection de lumière et/ou d'images statiques ou dynamiques et/ou de vidéos.

3. Dispositif d'éclairage intérieur selon la revendication 2, **caractérisé en ce que** la source lumineuse (2) est un pico-projecteur.

4. Dispositif d'éclairage intérieur selon l'une quelconque des revendications 1 à 3, **caractérisé en ce que** la source lumineuse (2) est implantée au niveau du pavillon avant et/ou arrière du véhicule et/ou dans la console centrale (6) et/ou dans au moins une console arrière (7).

5. Dispositif d'éclairage intérieur selon la revendication 4, **caractérisé en ce que** la surface vitrée est un pare-brise et/ou au moins une vitre latérale avant et /ou arrière et/ou un toit vitré et/ou une lunette arrière.

6. Dispositif d'éclairage intérieur selon l'une des revendications 4 ou 5, **caractérisé en ce que** la surface vitrée comprend un verre électrochrome.

7. Dispositif d'éclairage intérieur selon la revendication 6, **caractérisé en ce que** le verre a une structure composite.

8. Dispositif d'éclairage intérieur selon la revendication 6, **caractérisé en ce que** le verre est recouvert d'un film électrochrome.

9. Dispositif d'éclairage intérieur selon l'une quelconque des revendications 1 à 8, **caractérisé en ce que** les zones avant et/ou arrière de l'habitacle et/ou les supports de projection (3) et/ou les sources lumineuses (2) sont configurées de manière indépendante et autonome.

10. Dispositif d'éclairage intérieur selon l'une quelconque des revendications 1 à 9, **caractérisé en ce que** le module de commande comporte au moins un processeur, une mémoire, un moyen de stockage de données et un moyen de lecture de fichiers d'images statiques et/ou dynamiques.

11. Dispositif d'éclairage intérieur selon la revendication 10, **caractérisé en ce que** le moyen de stockage de données comprend une base de données d'images préenregistrées ou transférées par les utilisateurs à l'aide d'un dispositif multimédia amovible.

12. Dispositif d'éclairage intérieur selon la revendication 11, **caractérisé en ce que** le dispositif multimédia est une carte mémoire de stockage de données numériques SD ou une clef USB ou un Smartphone ou un appareil photos ou un PC portable ou une tablette ou un lecteur de DVD.

13. Dispositif d'éclairage intérieur selon l'une quelconque des revendications précédentes, **caractérisé en ce que** le module de commande comporte au moins un bouton de commande (4) implanté à l'arrière de l'habitacle.

14. Procédé d'éclairage d'au moins une partie d'un espace intérieur d'un véhicule automobile par un dispositif d'éclairage intérieur (1) selon l'une des revendications précédentes, ledit procédé comprenant au moins
- une étape de configuration d'au moins un support de projection (3) du véhicule par atténuation de la transmission lumineuse, et
- une étape de configuration d'au moins une source lumineuse (2) de l'habitacle pour diriger le faisceau lumineux de ladite source sur le support de projection configuré.

15. Procédé d'éclairage, selon la revendication 14, **caractérisé en ce qu'**il comporte une étape d'analyse des données collectées par au moins un capteur de température et/ou d'intensité lumineuse.

16. Procédé d'éclairage, selon la revendication 14 ou 15, **caractérisé en ce qu'**il comporte une étape de sélection et de lecture de fichiers d'images préenregistrées dans le moyen de stockage ou transférées par au moins un occupant du véhicule à l'aide d'un dispositif multimédia amovible.

17. Procédé d'éclairage, selon l'une quelconque des revendications 14 à 16, permettant d'occulter et de modifier la vue sur l'extérieur depuis l'intérieur de l'habitacle en vue de créer une ambiance spécifique apaisante au sein du véhicule, ledit procédé d'éclairage comporte au moins :
- une étape d'activation du module de commande,
- une étape de sélection et de configuration d'au moins une surface vitrée électrochrome constitutive du support de projection par atténuation de la transmission lumineuse de ladite surface vitrée, de manière à ce que ladite surface vitrée bascule d'un mode passif OFF, correspondant à un état transparent, à un mode actif ON, correspondant à un état opaque,
- ladite étape de configuration d'au moins une source lumineuse de l'habitacle,
- une étape de sélection et de lecture de fichiers d'images préenregistrées dans un moyen de stockage d'un module de commande du dispositif d'éclairage ou transférées par au moins un occupant du véhicule à l'aide d'un dispositif multimédia amovible préalablement connecté audit module de commande.

## Patentansprüche

1. Innenbeleuchtungsvorrichtung (1) für ein Kraftfahrzeug, umfassend:
- wenigstens eine Lichtquelle (2), die geeignet ist, wenigstens ein Lichtbündel auszusenden,
- wenigstens einen Projektionsträger (3), wobei der Projektionsträger (3) eine Glasfläche des Fahrzeugs ist, die dafür angeordnet ist, umkehrbar von einem transparenten Zustand zu einem opaken Zustand zu schalten,
- ein Steuerungsmodul, das dafür angeordnet ist, die Lichtquelle (2) zu konfigurieren, wobei das Modul (4) ferner dafür angeordnet ist, den wenigstens einen Projektionsträger (3) in einen passiven Modus oder in einen aktiven Modus zu konfigurieren, in dem das Lichtbündel auf dem Projektionsträger (3) und gemäß dem manuellen oder automatischen Steuerungsmodus des Kraftfahrzeugs ein Bild bildet
**dadurch gekennzeichnet, dass** sie wenigstens einen Temperatur- und/oder Lichtintensitätssensor aufweist, der dem Steuerungsmodul zugeordnet ist, wobei der wenigstens eine Sensor die Bedingungen außerhalb des Fahrzeugs erfasst, und dadurch, dass das Bild, das auf dem Projektionsträger (3) gebildet wird, in Reaktion auf die Daten gebildet wird, die von dem wenigstens einen Sensor gesammelt werden, und dadurch, dass in Reaktion auf die Daten, die von dem wenigstens einen Sensor gesammelt werden, das Steuerungsmodul das Bild auswählt und projiziert.

2. Innenbeleuchtungsvorrichtung nach Anspruch 1, **dadurch gekennzeichnet, dass** die Lichtquelle (2) eine Vorrichtung zur Projektion von Licht und/oder Stand- oder Bewegtbildern und/oder Videos ist.

3. Innenbeleuchtungsvorrichtung nach Anspruch 2, **dadurch gekennzeichnet, dass** die Lichtquelle (2) ein Pikoprojektor ist.

4. Innenbeleuchtungsvorrichtung nach einem der Ansprüche 1 bis 3, **dadurch gekennzeichnet, dass** die Lichtquelle (2) am vorderen und/oder hinteren Dachbereich des Fahrzeugs und/oder in der Mittelkonsole (6) und/oder in wenigstens einer hinteren Konsole (7) eingebaut ist.

5. Innenbeleuchtungsvorrichtung nach Anspruch 4, **dadurch gekennzeichnet, dass** die Glasfläche eine Windschutzscheibe und/oder wenigstens eine vordere und/oder hintere Seitenscheibe und/oder ein Glasdach und/oder eine Heckscheibe ist.

6. Innenbeleuchtungsvorrichtung nach einem der Ansprüche 4 oder 5, **dadurch gekennzeichnet, dass** die Glasfläche ein elektrochromes Glas umfasst.

7. Innenbeleuchtungsvorrichtung nach Anspruch 6, **dadurch gekennzeichnet, dass** das Glas eine Verbundstruktur aufweist.

8. Innenbeleuchtungsvorrichtung nach Anspruch 6, **dadurch gekennzeichnet, dass** das Glas von einem elektrochromen Film bedeckt ist.

9. Innenbeleuchtungsvorrichtung nach einem der Ansprüche 1 bis 8, **dadurch gekennzeichnet, dass** der vordere und/oder hintere Bereich des Fahrzeuginnenraums und/oder die Projektionsträger (3) und/oder die Lichtquellen (2) unabhängig und autonom konfiguriert sind.

10. Innenbeleuchtungsvorrichtung nach einem der Ansprüche 1 bis 9, **dadurch gekennzeichnet, dass** das Steuerungsmodul wenigstens einen Prozessor, einen Speicher, ein Datenspeichermittel und ein Mittel zum Lesen von Stand- und/oder Bewegtbilddateien aufweist.

11. Innenbeleuchtungsvorrichtung nach Anspruch 10, **dadurch gekennzeichnet, dass** das Datenspeichermittel eine Datenbank mit Bildern umfasst, die vorab gespeichert sind oder von den Benutzern mithilfe einer entfernbaren Multimediavorrichtung übertragen werden.

12. Innenbeleuchtungsvorrichtung nach Anspruch 11, **dadurch gekennzeichnet, dass** die Multimediavorrichtung eine SD-Speicherkarte zur Speicherung digitaler Daten oder ein USB-Stick oder ein Smartphone oder ein Fotoapparat oder ein tragbarer PC oder ein Tablet oder ein DVD-Player ist.

13. Innenbeleuchtungsvorrichtung nach einem der vorhergehenden Ansprüche, **dadurch gekennzeichnet, dass** das Steuerungsmodul wenigstens einen Steuerknopf (4) aufweist, der hinten im Fahrzeuginnenraum eingebaut ist.

14. Verfahren zur Beleuchtung wenigstens eines Abschnitts eines Innenraums eines Kraftfahrzeugs durch eine Innenbeleuchtungsvorrichtung (1) nach einem der vorhergehenden Ansprüche, wobei das Verfahren wenigstens Folgendes umfasst
- einen Schritt des Konfigurierens wenigstens eines Projektionsträgers (3) des Fahrzeugs durch Dämpfung der Lichtdurchlässigkeit, und
- einen Schritt des Konfigurierens wenigstens einer Lichtquelle (2) des Fahrzeuginnenraums, um das Lichtbündel von der Quelle auf den konfigurierten Projektionsträger zu richten.

15. Beleuchtungsverfahren nach Anspruch 14, **dadurch gekennzeichnet, dass** es einen Schritt des Analysierens der Daten umfasst, die von wenigstens einem Temperatur- und/oder Lichtintensitätssensor gesammelt werden.

16. Beleuchtungsverfahren nach Anspruch 14 oder 15, **dadurch gekennzeichnet, dass** es einen Schritt des Auswählens und des Lesens von Bilddateien aufweist, die vorab im Speichermittel gespeichert sind oder von wenigstens einem Insassen des Fahrzeugs mithilfe einer entfernbaren Multimediavorrichtung übertragen werden.

17. Beleuchtungsverfahren nach einem der Ansprüche 14 bis 16, mit dem die Sicht nach draußen vom Inneren des Fahrzeuginnenraums aus abgedunkelt und verändert werden kann, um ein beruhigendes spezifisches Ambiente im Inneren des Fahrzeugs zu schaffen, wobei das Beleuchtungsverfahren wenigstens Folgendes aufweist:
- einen Schritt des Aktivierens des Steuerungsmoduls,
- einen Schritt des Auswählens und Konfigurierens wenigstens einer elektrochromen Glasfläche, die den Projektionsträger bildet, durch Dämpfung der Lichtdurchlässigkeit der Glasfläche, so dass die Glasfläche von einem passiven OFF-Modus, der einem transparenten Zustand entspricht, in einen aktiven ON-Modus schaltet, der einem opaken Zustand entspricht,
- den Schritt des Konfigurierens wenigstens einer Lichtquelle des Fahrzeuginnenraums,
- einen Schritt des Auswählens und Lesens von Bilddateien, die vorab in einem Speichermittel eines Steuerungsmoduls der Beleuchtungsvorrichtung gespeichert sind oder von wenigstens einem Insassen des Fahrzeugs mithilfe einer entfernbaren Multimediavorrichtung übertragen werden, die zuvor mit dem Steuerungsmodul verbunden wurde.

## Claims

1. Interior lighting device (1) for a motor vehicle comprising:
- at least one light source (2) capable of emitting at least one light beam,
- at least one projection support (3), the projection support (3) being a glazed surface of the vehicle arranged to switch reversibly from a transparent state to an opaque state,
- a control module arranged to configure the light source (2), the module (4) being also arranged to configure the at least one projection support (3) in a passive mode or in an active mode in which the light beam forms an image on said projection support (3) and according to the manual or automatic driving mode of the motor vehicle
**characterized in that** it comprises at least one temperature and/or light intensity sensor associated with said control module, said at least one sensor detecting the conditions outside the vehicle and **in that** the image formed on said projection support (3) is formed in response to the data collected by said at least one sensor, and **in that**, in response to the data collected by said at least one sensor, the control module selects and projects said image.

2. Interior lighting device according to Claim 1, **characterized in that** the light source (2) is a device for projecting light and/or static or dynamic images and/or videos.

3. Interior lighting device according to Claim 2, **characterized in that** the light source (2) is a pico-projector.

4. Interior lighting device according to any one of Claims 1 to 3, **characterized in that** the light source (2) is installed in the front and/or rear ceiling of the vehicle and/or in the centre console (6) and/or in at least one rear console (7).

5. Interior lighting device according to Claim 4, **characterized in that** the glazed surface is a windscreen and/or at least one front and/or rear side window and/or a sunroof and/or a rear window.

6. Interior lighting device according to one of Claims 4 and 5, **characterized in that** the glazed surface comprises an electrochromic glass.

7. Interior lighting device according to Claim 6, **characterized in that** the glass has a composite structure.

8. Interior lighting device according to Claim 6, **characterized in that** the glass is covered with an electrochromic film.

9. Interior lighting device according to any one of Claims 1 to 8, **characterized in that** the front and/or rear zones of the car interior and/or the projection supports (3) and/or the light sources (2) are configured independently and autonomously.

10. Interior lighting device according to any one of Claims 1 to 9, **characterized in that** the control module comprises at least a processor, a memory, a data storage means and a means for reading static and/or dynamic image files.

11. Interior lighting device according to Claim 10, **characterized in that** the data storage means comprises a database of images prestored or transferred by the users using a removable multimedia device.

12. Interior lighting device according to Claim 11, **characterized in that** the multimedia device is a digital data storage SD memory card or a USB key or a smartphone or a camera or a laptop PC or a tablet or a DVD player.

13. Interior lighting device according to any one of the preceding claims, **characterized in that** the control module comprises at least one control button (4) installed at the rear of the car interior.

14. Method for lighting at least a part of an interior space of a motor vehicle by an interior lighting device (1) according to one of the preceding claims, said method comprising at least
- a step of configuration of at least one projection support (3) of the vehicle by attenuation of the light transmission, and
- a step of configuration of at least one light source (2) of the car interior to direct the light beam from said source onto the configured projection support.

15. Lighting method according to Claim 14, **characterized in that** it comprises a step of analysis of the data collected by at least one temperature and/or light intensity sensor.

16. Lighting method according to Claim 14 or 15, **characterized in that** it comprises a step of selection and of reading of image files prestored in the storage means or transferred by at least one occupant of the vehicle using a removable multimedia device.

17. Lighting method according to any one of Claims 14 to 16, making it possible to occult and modify the view from inside the car interior in order to create a soothing specific ambiance within the vehicle, said lighting method comprising at least:
- a step of activation of the control module,
- a step of selection and of configuration of at least one electrochromic glazed surface forming the projection support by attenuation of the light transmission of said glazed surface, so that said glazed surface switches from an OFF passive mode, corresponding to a transparent state, to an ON active mode, corresponding to an opaque state,
- said step of configuration of at least one light source of the car interior,
- a step of selection and of reading of image files prestored in a storage means of a control module of the lighting device or transferred by at least one occupant of the vehicle using a removable multimedia device previously connected to said control module.
